# DEMANDE DE BREVET EUROPEEN

(11) **EP 1 634 695 A1**
(43) Date de publication de la demande: **15.03.2006**
(21) Numéro de dépôt: 04021409.0
(22) Date de dépôt: 09.09.2004
(51) Int. Cl.: B32B 17/10, B32B 17/06

(54) **Procédé de fabrication d'un assemblage composite feuilleté et installation pour sa mise en oeuvre**

(71) Demandeur: Halleux, Jean-Marc, B-5081 La Bruyère (BE)
(72) Inventeur: Halleux, Jean-Marc, B-5081 La Bruyère (BE)

(57) **Abrégé**

Procédé de fabrication d'un assemblage composite feuilleté selon lequel on forme un sandwich (4) comprenant un film adhésif (3) entre deux panneaux (1, 2), on colle une paire de rubans souples (5, 6, 7, 8, 9, 10) à la périphérie des panneaux (1, 2) et en saillie de ceux-ci, on colle ensemble les zones en saillie (11) des rubans pour former une gorge (12) à la périphérie du sandwich et on soumet la gorge à une dépression pour faire le vide d'air entre les deux panneaux.

## Description

### Domaine de l'invention

L'invention se rapporte à la fabrication des assemblages composites feuilletés, tels que les vitrages feuilletés.

Elle concerne plus particulièrement la fabrication d'assemblages composites feuilletés comprenant un film adhésif pris en sandwich entre deux panneaux, comme c'est couramment le cas pour les vitrages feuilletés de sécurité utilisés dans les voitures automobiles et dans l'industrie du bâtiment.

### Etat de la technique

Les vitrages feuilletés sont communément utilisés dans l'industrie automobile pour la fabrication des pare-brise des voitures automobiles et dans l'industrie du bâtiment pour la fabrication notamment de vitrages de sécurité, de verrières et de garde-fous de balcons ou de terrasses.

Les vitrages feuilletés sont des assemblages composites feuilletés. Ils comprennent normalement deux feuilles de verre superposées, entre lesquelles un film adhésif est pris en sandwich. Le film adhésif a pour fonction de solidariser les deux feuilles de verre. On utilise communément du poly(butyral vinylique) (PVB) ou un caoutchouc d'éthyl vinyl acétate (EVA), bien que d'autres matières adhésives puissent convenir.

Il existe diverses techniques pour fabriquer des vitrages feuilletés (EP-A-0 331 642).
Selon une première technique connue, on superpose deux feuilles de verre, en interposant entre-elles un film adhésif adéquat (par exemple du PVB), puis on traite le sandwich ainsi réalisé, dans une calandre pour évacuer l'air emprisonné dans le film adhésif entre les deux feuilles de verre et sceller les bords de sandwich. Le calandrage est suivi d'un traitement en autoclave, à une température de l'ordre d'environ 130 à 150°C et sous haute pression (par exemple 13 bars).
Dans une seconde technique connue, le calandrage est remplacé par un traitement sous vide. A cet effet, on enferme le sandwich dans un sac étanche et on soumet le sac à une dépression pour y réaliser le vide d'air.

Les deux techniques connues qui viennent d'être décrites sont coûteuses. La seconde technique, en particulier, présente la particularité désavantageuse qu'un sac étanche ne peut généralement servir que pour un seul vitrage, ce qui grève le coût et accroît les rejets industriels.

On a aussi songé à remplacer le sac étanche par un cadre ou anneau élastique préformé en silicone, dans lequel on insère la bordure du sandwich. On forme de la sorte une gorge étanche à la périphérie du sandwich et on soumet cette gorge à une dépression pour faire le vide d'air entre les panneaux du sandwich. Cette technique connue est facile à mettre en oeuvre, mais elle nécessite un investissement coûteux pour la fabrication du cadre en silicone. Elle ne peut dès lors se justifier, d'un point de vue économique, que pour la fabrication de vitrages en grande série. A contrario, elle n'est pas adaptée à la fabrication de vitrages en petite série, comme c'est généralement le cas dans l'industrie du bâtiment

### Résumé de l'invention

L'invention vise à remédier aux désavantages énoncés plus haut des techniques connues de fabrication des vitrages feuilletés.

L'invention a dès lors pour objectif de fournir un procédé pour la fabrication de vitrages feuilletés, dans lequel l'évacuation de l'air présent dans le sandwich est réalisée par une mise sous vide d'air du sandwich.

L'invention a plus particulièrement pour objectif de faciliter la mise sous vide du sandwich, par un moyen plus économique que ceux de l'art antérieur décrit plus haut.

L'invention a spécialement pour objectif d'adapter la technique précitée utilisant un cadre périphérique, à une production économique de vitrages en petite série, voire unitaire.

De manière plus générale, l'invention a pour objectif de fournir un procédé pour la fabrication d'assemblages composites feuilletés, dans lequel on forme un sandwich comprenant un film adhésif entre deux panneaux et on fait le vide d'air entre les panneaux du sandwich.

En conséquence, l'invention concerne un procédé de fabrication d'un assemblage composite feuilleté selon lequel on forme un sandwich comprenant un film adhésif entre deux panneaux, on forme une gorge périphérique en bordure du sandwich et on soumet la gorge à une dépression pour faire le vide d'air entre les deux panneaux, le procédé se caractérisant en ce que, pour former la gorge, on colle au moins une paire de rubans souples et sensiblement imperméables à l'air, à la périphérie des panneaux et en saillie de ceux-ci et on colle ensemble les zones en saillie des rubans.

Dans le procédé selon l'invention, les panneaux sont, par définition, des objets solides de grande surface, par comparaison avec leur épaisseur.

Le film adhésif du sandwich a pour fonction de solidariser les deux panneaux de l'assemblage. Il est normalement en contact avec sensiblement la totalité des surfaces respectives des panneaux, qui se font face dans le sandwich. Les surfaces des panneaux, qui se font face dans le sandwich doivent par conséquent posséder des profils sensiblement complémentaires. Nonobstant cette condition, la forme des panneaux n'est pas critique pour la définition de l'invention. Ils peuvent par exemple avoir un profil circulaire, ovale ou polygonal. Les profils comportant des arêtes rectilignes sont préférés, tels que les triangles, les trapèzes, les parallélogrammes, les rectangles et les carrés ou les polygones réguliers ou irréguliers, concaves ou convexes, comprenant plus de quatre cotés. Les panneaux peuvent indifféremment être plans ou avoir un profil cintré.

Les panneaux doivent être étanche à l'air. Nonobstant cette condition, la matière des panneaux n'est pas critique pour la définition de l'invention. Les panneaux peuvent être en une matière opaque, translucide ou transparente à une partie ou la totalité du rayonnement électromagnétique du spectre visible. Ils peuvent être rigides, semi-rigides ou souples. L'invention s'applique spécialement bien aux panneaux rigides. Des exemples de panneaux entrant dans la fabrication de l'assemblage composite feuilleté comprennent des feuilles ou des tôles métalliques, des feuilles ou panneaux en polymère de synthèse (par exemple en polyester ou en polycarbonate de bisphénol) et des feuilles ou panneaux en verre (liste non exhaustive). Dans l'assemblage composite feuilleté sur lequel porte le procédé selon l'invention, les deux panneaux peuvent être en des matières différentes. Un des deux panneaux peut par exemple être en métal et l'autre en verre.

Le film adhésif est interposé entre les deux panneaux du sandwich. Il a pour fonction de lier les deux panneaux entre-eux pour assurer la cohésion de l'assemblage composite feuilleté. La matière de l'adhésif va dès lors dépendre de la matière des panneaux et des propriétés recherchées pour l'assemblage composite feuilleté. Dans le cas particulier où l'assemblage feuilleté est un vitrage feuilleté transparent aux radiations électromagnétiques du spectre visible, le film adhésif doit notamment être sélectionné parmi ceux qui sont transparents audites radiations électromagnétiques et il a de préférence un indice de réfraction proche de celui des panneaux. La matière du film adhésif va en outre dépendre du mode opératoire choisi pour assurer la liaison des panneaux. Dans un mode opératoire préféré, le film adhésif est mis en oeuvre, de manière connue en soi, à l'état d'un film adhésif plastique solide ou semi-solide et l'adhésion des panneaux est opérée par compression et chauffage du sandwich. Le poly(butyral vinylique) (PVB) et le caoutchouc éthyl vinyl acétate (EVA) sont des matières plastiques qui conviennent bien pour ce mode opératoire. Elles sont communément utilisées pour la fabrication des pare brise feuilletés de voitures automobiles et pour la fabrication de vitrages de sécurité destinés à l'industrie du bâtiment.
Le choix de l'adhésif doit dès lors être déterminée dans chaque particulier par l'homme du métier, en fonction des divers paramètres énoncés plus haut.

Le sandwich mis en oeuvre dans le procédé selon l'invention peut comprendre un film adhésif unique, entre une paire unique de panneaux. En variante, le sandwich peut comprendre une alternance de panneaux et de films adhésifs, par exemple une alternance de trois panneaux et de deux films adhésifs ou une alternance de quatre panneaux et de trois films adhésifs. De manière plus générale, dans le procédé selon l'invention, le sandwich comprend une alternance de n panneaux et de n-1 films adhésifs interposés respectivement entre les n panneaux, n désignant un nombre entier au moins égal à 2. En théorie, le nombre entier n n'a pas de limite supérieure. En pratique, la valeur maximum admissible du nombre n va dépendre de divers facteurs, parmi lesquels figurent notamment la matière des panneaux et des films utilisés, ainsi que les dimensions des panneaux. La valeur optimum du nombre n va dépendre de la destination de l'assemblage composite feuilleté et des propriétés recherchées pour celui-ci. Dans la plupart des cas, n est inférieur à 20, plus généralement à 10. Les valeurs de 2 à 6 (de préférence de 2 à 4) sont les plus couramment utilisées, dans le cas de vitrages feuilletés.

Dans le procédé selon l'invention, on fait le vide d'air entre les deux panneaux du sandwich. Le vide d'air consiste à soumettre la zone d'interface entre les panneaux à une dépression contrôlée. Il a pour fonction d'évacuer les poches d'air qui sont inévitablement présentes dans le film adhésif mis en oeuvre, ainsi que les poches d'air qui, le cas échéant, se sont formées entre les deux panneaux lors de la formation du sandwich. Les conditions opératoires du vide d'air, notamment la dépression et la température vont dépendre des matières des panneaux et du film adhésif, ainsi que de la rigidité des panneaux ou de leur résistance à la déformation. Les conditions optimum doivent être déterminées dans chaque cas particulier par l'homme du métier, par exemple au moyen d'un travail de routine au laboratoire.

Selon l'invention, pour faire le vide d'air entre les deux panneaux du sandwich, on colle au moins une paire de rubans souples à la périphérie des panneaux et en saillie de ceux-ci, on colle ensemble les zones en saillie des rubans souples de manière à ménager une gorge périphérique en bordure du sandwich et on soumet la gorge à une dépression.

Dans le procédé selon l'invention, les rubans souples doivent être sensiblement imperméables à l'air. Ils sont avantageusement des rubans autocollants, bien que l'on puisse également utiliser des rubans que l'on encolle avant de les appliquer sur la périphérie des panneaux.

Pour mettre la gorge sous vide, on relie celle-ci à une machine pneumatique appropriée pour réaliser une dépression définie dans la gorge. La connexion de la gorge à la machine pneumatique peut être réalisée par tout moyen approprié, par exemple au moyen d'une valve fixée à l'un des rubans souples, ou au moyen d'une aiguille que l'on insère à travers un des rubans souples.

Dans un mode de réalisation avantageux du procédé selon l'invention, les rubans souples sont enroulés sur des bobines que l'on dispose respectivement de part et d'autre du sandwich et que l'on déroule sur les deux panneaux. Dans ce mode de réalisation de l'invention, on utilise de préférence des rubans autocollants.
Dans la mise en oeuvre de ce mode d'exécution préféré du procédé selon l'invention, on peut faire rouler les bobines sur les panneaux du sandwich, qui est immobile. On préfère, en variante, déplacer le sandwich entre les deux bobines, au contact de celles-ci.

Le procédé selon l'invention s'applique spécialement bien aux sandwiches comprenant des arêtes rectilignes. A cet effet, dans une forme de réalisation particulière du procédé selon l'invention, appliquée au cas où le sandwich comprend au moins deux arêtes rectilignes sécantes, on colle une première paire de rubans souples aux deux panneaux, le long d'une desdites arêtes rectilignes et une seconde paire de rubans souples le long de l'autre arête rectiligne. Dans cette forme de réalisation du procédé selon l'invention, on peut avantageusement utiliser des rubans souples autocollants fournis sous la forme de bobines et opérer de la manière exposée plus haut.

Dans une variante d'exécution avantageuse de cette forme de réalisation de l'invention, avant de coller les deux paires de rubans souples, on pose une pièce d'angle à l'intersection des deux arêtes sécantes du sandwich et on recouvre ladite pièce d'angle avec lesdits rubans souples. Dans cette variante d'exécution du procédé, la pièce d'angle a pour fonction d'assurer la continuité de la gorge périphérique à la jonction des deux arêtes sécantes du sandwich. A cet effet, elle est profilée pour former un chenal de communication sous les deux paires de rubans souples. Ce chenal de communication peut avoir tout profil approprié et comprendre un canal ouvert ou un conduit tubulaire. La pièce d'angle peut être souple ou rigide. On préfère les pièces d'angles rigides. Dans le cas d'une pièce d'angle souple, sa résistance à la déformation ou à l'écrasement sous charge doit être suffisante pour que le chenal précité continue à réaliser sa fonction après qu'il ait été recouvert des deux paires de rubans souples. La pièce d'angle peut avantageusement être réalisée en métal ou en un polymère de synthèse, les polymères oléfiniques (spécialement ceux dérivés de l'éthylène) conviennent généralement bien.
Dans la variante d'exécution préférée susdite de l'invention, la pièce d'angle peut avantageusement servir à la connexion à la machine pneumatique servant à réaliser la dépression dans la gorge.

Dans une autre forme de réalisation particulière du procédé selon l'invention, avant d'appliquer la paire de rubans souples sur les panneaux du sandwich, on dispose, en bordure du sandwich, un profilé délimitant un chenal périphérique communiquant avec l'interface entre les deux panneaux et on recouvre ensuite ledit profilé avec la paire de rubans souples.
Dans cette forme de réalisation particulière de l'invention, le chenal formé par le profilé constitue une partie au moins (de préférence la totalité) de la gorge précitée soumise à la dépression. Le profilé est dès lors normalement en une matière imperméable à l'air et il est normalement pourvu d'un moyen adéquat (par exemple une valve ou similaire) pour relier ledit chenal à la machine pneumatique servant à réaliser la dépression dans la gorge. Le profilé peut avoir toute forme compatible avec sa fonction de former le chenal périphérique susdit. Il peut par exemple être un profilé en U tourné de 90 degrés et orienté vers la bordure du sandwich, de manière que ses deux ailes soient disposées dans le prolongement des faces des panneaux. En variante, il peut comprendre un tube percé d'ouvertures en regard de l'interface entre les deux panneaux du sandwich.
La matière du profilé n'est pas critique, pour autant qu'elle soit imperméable à l'air. On préfère les matières rigides. Les métaux et les polymères de synthèse conviennent bien.
La forme de réalisation qui vient d'être décrite présente l'avantage de stabiliser le volume et le profil de la gorge périphérique en bordure du sandwich et de faciliter ainsi l'évacuation de l'air de l'interface entre les panneaux.

Dans une forme de réalisation supplémentaire du procédé selon l'invention, avant d'appliquer la paire de rubans souples sur les panneaux du sandwich, on dispose un anneau poreux en bordure du sandwich et on recouvre ensuite ledit anneau avec la paire de rubans souples. Dans cette forme de réalisation supplémentaire du procédé selon l'invention, l'anneau poreux doit comprendre une proportion substantielle de pores ouverts, servant de communication entre l'interface des panneaux et la gorge susdite reliée à la machine pneumatique.
L'anneau poreux peut être souple ou rigide. On préfère les anneaux poreux rigides. L'anneau poreux peut être en toute matière adéquate. Il est avantageusement une mousse synthétique à pores ouverts. Les polyoléfines (particulièrement celles dérivées de l'éthylène) et les silicones conviennent bien.
La forme de réalisation supplémentaire qui vient d'être décrite présente également l'avantage de stabiliser le volume et le profil de la gorge périphérique en bordure du sandwich et de faciliter ainsi l'évacuation de l'air de l'interface entre les panneaux.

L'invention s'applique à la fabrication de tous assemblages composites feuilletés, tels que les assemblages de panneaux en métal utilisés dans l'industrie du bâtiment et en génie civil et les assemblages de panneaux en polymère de synthèse, par exemple en polyester, utilisables dans les industries du bâtiment et de l'automobile.

L'invention trouve une application particulièrement intéressante pour la fabrication de vitrages feuilletés, utilisés comme vitrages de sécurité dans l'industrie du bâtiment ou l'industrie automobile. Elle s'applique notamment à la fabrication de vitrages de sécurité du type duplex, triplex ou multiplex, comprenant respectivement deux feuilles de verre, trois feuilles de verre ou plus de trois feuilles de verre. Dans cette application du procédé selon l'invention, le ou chaque film adhésif du sandwich de feuilles de verre doit habituellement être transparent à une partie au moins du rayonnement électromagnétique visible et il est de préférence sélectionné parmi les substances dont l'indice de réfraction aux radiations visibles est proche de celui des panneaux transparents mis en oeuvre. Dans le cas de panneaux en verre (indice de réfraction à la lumière visible sensiblement égal à 1,52), on sélectionne avantageusement des films adhésifs en PVB (indice de réfraction égal à 1,487) ou en EVA (indice de réfraction égal à 1,491). Les films en EVA sont préférés pour cette application de l'invention.

L'invention s'applique également à la fabrication d'assemblages composites feuilletés mixtes, associant deux ou plusieurs panneaux en matières différentes ou de textures différentes, par exemple au moins une feuille de verre et au moins un panneau en polymère de synthèse ou deux feuilles de verre de couleur ou de texture différentes.

L'invention concerne également une installation originale pour la fabrication, au moyen du procédé selon l'invention décrit plus haut, d'un assemblage composite feuilleté plan, comprenant au moins une arête rectiligne, ladite installation comprenant, sur un bâti, une paire de bobines de rubans adhésifs souples et un dispositif pour la translation, entre la paire de bobines et à leur contact, d'un sandwich tel que défini plus haut.

Dans l'installation selon l'invention, les rubans adhésifs sont de préférence des rubans autocollants.
Le dispositif de translation n'est pas critique pour la définition de l'invention. Il comprend avantageusement un banc de rouleaux horizontaux, du type de ceux communément utilisés en verrerie pour la fabrication du verre plat. Le banc de rouleaux est avantageusement motorisé, bien que cela ne soit pas indispensable. Il doit être positionné par rapport aux bobines de rubans adhésifs de manière que pendant le déplacement du sandwich, une arête rectiligne de celui-ci passe entre les deux bobines de rubans adhésifs qui, par frottement au contact des panneaux du sandwich, se déroulent alors sur ceux-ci.

Une première forme de réalisation modifiée de l'installation selon l'invention est spécialement adaptée au traitement de sandwich comprenant deux arêtes rectilignes sécantes. Dans cette forme de réalisation modifiée de l'invention, le dispositif de translation est équipé d'un organe capable de faire pivoter le sandwich pour modifier sa position par rapport au sens de sa translation entre la paire de bobines. Un tel organe, associé à un banc de rouleaux, est bien connu et communément utilisé dans l'industrie verrière pour la fabrication de verre plat.

Une deuxième forme de réalisation modifiée de l'installation selon l'invention est spécialement adaptée à la fabrication d'assemblages composites présentant au moins deux arêtes rectilignes et parallèles. Dans cette forme de réalisation modifiée, l'installation comprend une deuxième paire de bobines de rubans adhésifs, qui sont positionnées sur le bâti de telle sorte que pendant le déplacement du sandwich, les deux arêtes rectilignes parallèles dudit sandwich passent respectivement entre les deux paires de bobines de rubans adhésifs qui, par frottement au contact des panneaux du sandwich, se déroulent alors sur ceux ci. Dans cette forme de réalisation modifiée de l'installation selon l'invention, les deux paires de bobines sont généralement montées sur un châssis commun disposé transversalement par rapport à la direction de la translation. Leur disposition sur le châssis commun est de préférence adaptée pour permettre de modifier leur écartement en fonction de la distance séparant les deux arêtes rectilignes parallèles du sandwich.
La forme de réalisation modifiée qui vient d'être décrite peut être facilement adaptée à la fabrication d'assemblages composites ayant la forme d'un parallélogramme, d'un rectangle ou d'un carré, en équipant le dispositif de déplacement précité d'un organe de pivotement tel que défini et explicité plus haut.

Une troisième forme de réalisation de l'installation selon l'invention est destinée à la fabrication d'assemblages composites ayant la forme d'un rectangle ou d'un carré. Dans cette forme de réalisation, l'installation selon l'invention comprend quatre paires de bobines de ruban adhésif et deux dispositifs de translation. Les deux dispositifs de translation comprennent avantageusement des bancs de rouleaux comme exposés plus haut et ils sont disposés l'un par rapport à l'autre pour soumettre le sandwich respectivement à deux translations de directions perpendiculaires. Par ailleurs, l'un des dispositifs de translation coopère avec deux paires de bobines, de la manière exposée plus haut, en référence à la deuxième forme de réalisation modifiée de l'installation et l'autre dispositif coopère de la même manière avec les deux autres paires de bobines. L'installation est en outre équipée d'un organe adéquat, connu en soi, pour transférer le sandwich d'un dispositif de translation sur l'autre.

L'installation selon l'invention s'applique à la fabrication d'assemblages composites plans. Dans le cadre de la présente invention, l'expression « assemblages composites plans » inclut les assemblages composites dont seule la périphérie ou une partie de celle-ci est plane et comprend une arête rectiligne. Des exemples de tels assemblages composites incluent par exemple des coupoles comprenant une bordure plane carrée ou rectangulaire

### Brève description des figures

Des particularités et détails de l'invention vont apparaître au cours de la description suivante de quelques formes de réalisation particulières de l'invention, en référence aux dessins annexés.
La figure 1 est une vue en plan d'un assemblage composite feuilleté en cours de fabrication au moyen du procédé selon l'invention ;
La figure 2 est une section transversale selon le plan II-II de la figure 1 ;
La figure 3 montre un stade de fabrication de l'assemblage composite feuilleté des figures 1 et 2, au moyen d'une forme de réalisation particulière du procédé selon l'invention ; et
La figure 4 est une vue schématique, en plan, d'une forme de réalisation particulière de l'installation selon l'invention.

Les figures ne sont pas dessinées à l'échelle.

Généralement, les mêmes numéros de référence désignent les mêmes éléments.

### Description détaillée de modes de réalisation particuliers

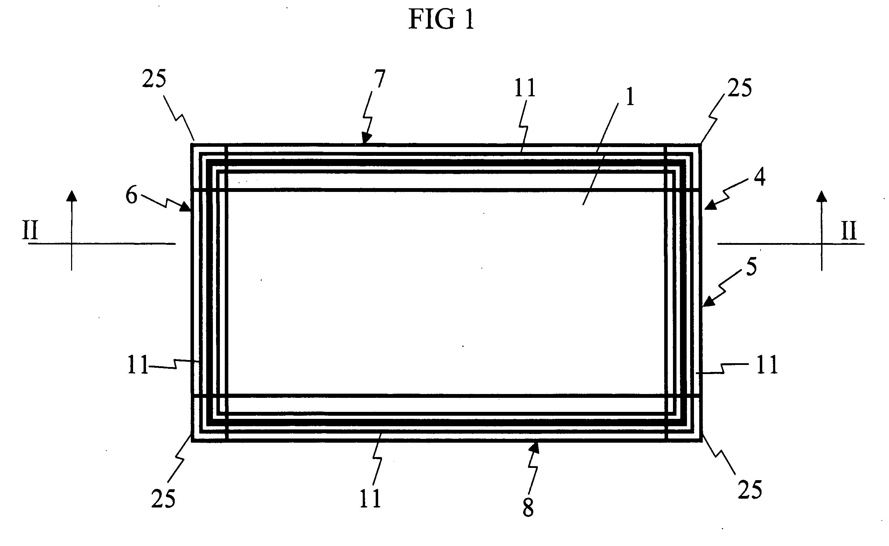

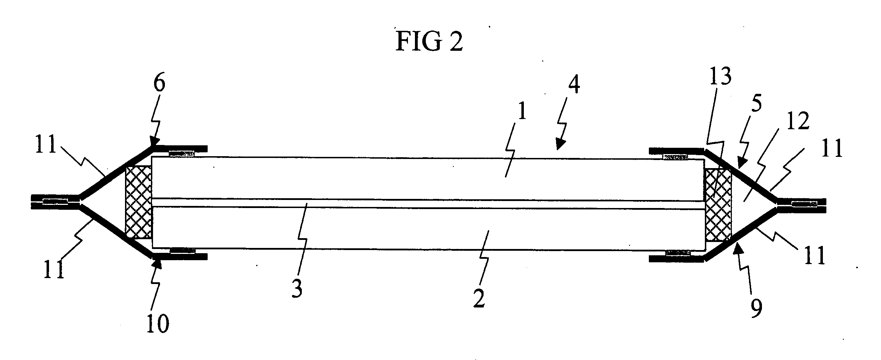

L'assemblage composite feuilleté représenté aux figures 1 et 2 est un vitrage duplex. Il comprend un sandwich obtenu en superposant deux feuilles de verre rectangulaires 1 et 2 entre lesquelles on a inséré un film en caoutchouc éthyl vinyl acétate (EVA) 3. Le sandwich est désigné dans son ensemble par la notation de référence 4.

Selon l'invention, pour faire le vide entre les deux feuilles de verre 1 et 2, on commence par coller huit rubans souples rectilignes et autocollants le long des quatre bords rectilignes du sandwich 4. Quatre rubans 5, 6, 7 et 8 sont collés à la périphérie de la feuille de verre 1 et quatre rubans analogues sont collés à la périphérie de la feuille de verre 2 (seuls deux rubans, désignés 9 et 10) sont visibles à la figure 2). Les huit rubans souples autocollants présentent chacun une zone 11 en saillie à la périphérie du sandwich 4. Les zones 11 des rubans 5 et 6 de la feuille de verre 1 sont collées respectivement aux zones 11 des rubans 9 et 10 de la feuille de verre 2. D'une manière similaire, les zones 11 des rubans 7 et 8 de la feuille de verre 1 sont collées aux zones en saillie des rubans (non visibles) de la feuille de verre 2, qui leur font face. L'ensemble collé des huit rubans souples constitue de la sorte un cadre périphérique autour du sandwich 4, avec une gorge interne 12. On fixe une valve (non représentée) à l'un des rubans adhésifs et on la relie à une machine pneumatique, conçue pour faire le vide dans la gorge 12. La valve peut par exemple comprendre une aiguille qui traverse l'un des huit rubans souples 5, 6, 7, 8, 9 ou 10 ou qui est inséré entre les zones 11 de deux rubans superposés.

Dans une forme de réalisation modifiée du procédé décrit en référence aux figures 1 et 2, on dispose quatre pièces d'angle 25 aux quatre coins du sandwich 4, avant d'appliquer les huit rubans adhésifs 5, 6, 7, 8, 9, 10. Les pièces d'angle 25 sont par exemple en polyéthylène rigide. Ils sont avantageusement percés de conduits tubulaires joignant les gorges 12 des quatre côtés de l'assemblage 4. Une des quatre pièces d'angle 25 est avantageusement utilisée pour y fixer la valve de jonction à la machine pneumatique de mise sous vide.

Dans une autre forme de réalisation modifiée du procédé décrit ci-dessus en référence aux figures 1 et 2, on dispose un anneau poreux 13 autour de la bordure du sandwich 4, avant d'appliquer et coller les rubans souples sur le sandwich 4. L'anneau poreux 13 doit être du type à pores ouverts, dont la fonction consiste à faire la jonction entre l'interface entre les deux panneaux 1 et 2 et la gorge 12. L'anneau poreux 13 a pour fonction d'empêcher une obstruction de la gorge 12 par affaissement des rubans souples 5, 6, 7, 8, 9, 10 sous l'effet de la dépression causée par la machine pneumatique de mise sous vide. Il doit dès lors être en une matière rigide ou en une matière souple susceptible de résister à un affaissement sous l'effet de la dépression causée par la machine pneumatique.

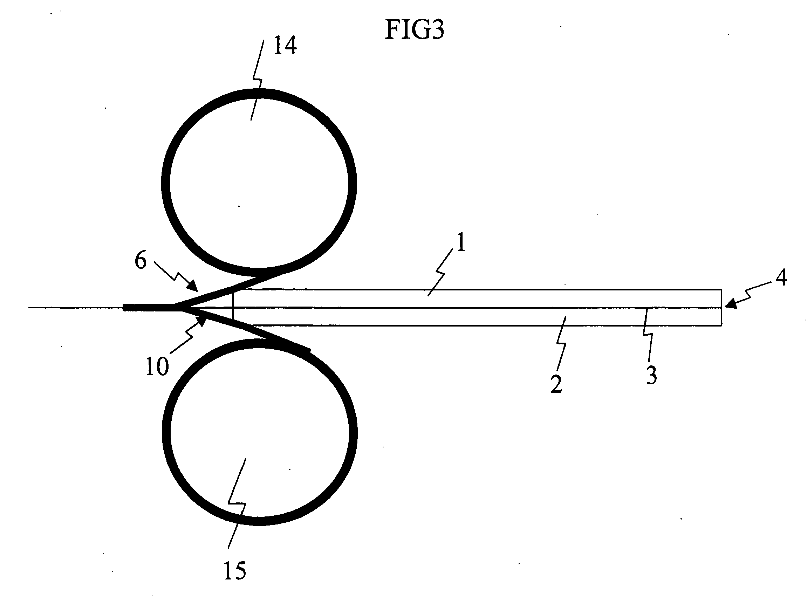

La figure 3 schématise un mode opératoire avantageux pour appliquer deux rubans souples et autocollants 6 et 10 sur le sandwich 4 et les solidariser le long de leur zone en saillie 11. Dans ce mode opératoire, les rubans souples 6 et 10 se présentent sous la forme de bobines 14 et 15. Pour appliquer et coller les deux rubans autocollants 6 et 10 sur les deux feuilles de verre 1 et 2, on fait défiler le sandwich 4 entre les deux bobines 14 et 15. Le déplacement du sandwich 4 au contact des bobines 14 et 15 provoque le déroulement des rubans souples 6 et 10 sur les deux feuilles de verre 1 et 2 et leur scellement à celles-ci.

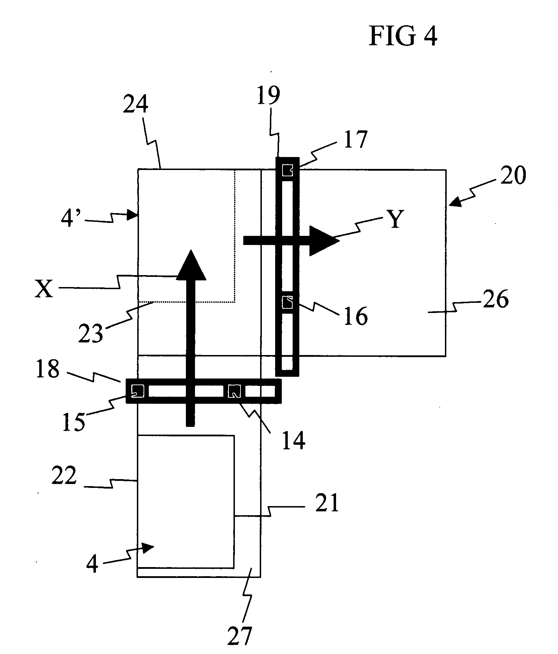

La figure 4 monte schématiquement une machine conforme à l'invention, adaptée pour appliquer les rubans souples à la périphérie d'un sandwich rectangulaire. L'installation comprend une première paire de bobines superposées 14 (dont une seule est visible) et une seconde paire de bobines superposées 15 (dont une seule est visible). Chaque bobine 14, 15 porte un rouleau de ruban adhésif. Les deux paires de bobines 14 et 15 sont montées sur un châssis 18, sur lequel elles peuvent coulisser dans le sens axial, de manière à pouvoir régler leur écartement. De manière similaire, deux autres paires de bobines superposées 16 et 17 sont montés sur un châssis 19, sur lequel elles peuvent coulisser dans le sens axial pour modifier leur écartement. Chaque bobine 16, 17 porte un rouleau de ruban adhésif. Les deux châssis 18 et 19 sont disposés orthogonalement sur un bâti 20. Le bâti 20 porte deux bancs de rouleaux schématisés en 26 et 27. Les bancs de rouleaux 26 et 27 sont d'un type connu communément utilisé dans l'industrie du verre pour la fabrication de vitrage plat. Ils sont respectivement disposés sur le bâti 20 de manière à réaliser une translation dans une direction perpendiculaire à l'axe du châssis 18 (banc de rouleaux 27) et une translation dans une direction perpendiculaire à l'axe du châssis 19 (banc de rouleaux 26).

Pour fabriquer un vitrage feuilleté au moyen de l'installation de la figure 4, on prépare d'abord un sandwich 4 du type de celui représenté à la figure 3, comprenant deux feuilles de verre rectangulaires 1, 2 et un film adhésif 3 interposé entre les deux feuilles de verre 1 et 2. On pose le sandwich 4 sur le banc de rouleaux 27, en prenant soin que ses arêtes parallèles 21 et 22 soient perpendiculaires à l'axe de rotation des bobines 14 et 15. On positionne les paires de bobines 14 et 15 sur le châssis 18 pour qu'elles chevauchent les arêtes 21 et 22 du sandwich 4. On déplace ensuite le sandwich 4 sur le banc de rouleaux 27 dans le sens de la flèche X, de sorte que les arêtes 21 et 22 du sandwich 4 passent entre les deux paires de bobines 14 et 15. Au contact du sandwich, ces quatre bobines de rubans adhésifs se déroulent progressivement et adhèrent aux feuilles de verre 1 et 2 du sandwich. Lorsque le sandwich 4 est arrivé à l'extrémité du bâti 20 (dans la position désignée 4'), on le transfère sur le banc de rouleaux 26 et on le déplace ensuite dans le sens de la flèche Y, de sorte que ses arêtes 23 et 24 passent entre les deux paires de bobines 16, 17. Au contact du sandwich 4', ces quatre bobines de rubans adhésifs se déroulent progressivement et adhèrent aux feuilles de verre du sandwich.

## Revendications

1. Procédé de fabrication d'un assemblage composite feuilleté selon lequel on forme un sandwich (4) comprenant un film adhésif (3) entre deux panneaux (1, 2), on forme une gorge périphérique en bordure du sandwich et on soumet la gorge à une dépression pour faire le vide d'air entre les deux panneaux, **caractérisé en ce que**, pour former la gorge (12), on colle au moins une paire de rubans souples et sensiblement imperméables à l'air (5, 6, 7, 8, 9, 10), à la périphérie des panneaux (1, 2) et en saillie de ceux-ci et on colle ensemble les zones en saillie (11) des rubans.

2. Procédé selon la revendication 2, **caractérisé en ce que**, pour coller la paire de rubans souples (5, 6, 7, 8, 9, 10) aux panneaux (1, 2) du sandwich (4), on déroule sur les panneaux deux bobines (14, 15) desdits rubans souples, situées respectivement dé part et d'autre du sandwich.

3. Procédé selon la revendication 1 ou 2, **caractérisé en ce que**, dans le cas où le sandwich (4) comprend au moins deux arêtes rectilignes sécantes (21, 22, 23, 24), on colle une première paire de rubans souples aux deux panneaux, le long d'une desdites arêtes rectilignes et une seconde paire de rubans souples le long de l'autre arête rectiligne.

4. Procédé selon la revendication 3, **caractérisé en ce qu'**on pose une pièce d'angle (25) à l'intersection des deux arêtes sécantes du sandwich et on recouvre ladite pièce d'angle avec lesdits rubans souples.

5. Procédé selon la revendication 4, **caractérisé en ce qu'**on met en oeuvre une pièce d'angle (25) qui est profilée pour former un chenal de communication sous les deux paires de rubans souples.

6. Procédé selon l'une quelconque des revendications 1 à 5, **caractérisé en ce qu'**avant d'appliquer la paire de rubans souples sur les panneaux du sandwich, on dispose, en bordure du sandwich, un anneau poreux (13) ou un profilé qui délimite un chenal périphérique communiquant avec l'interface entre les deux panneaux et on recouvre ensuite ledit anneau ou ledit profilé avec la paire de rubans souples.

7. Procédé selon l'une quelconque des revendications 1 à 6, **caractérisé en ce qu'**il est appliqué à la fabrication d'un vitrage feuilleté, dans lequel les panneaux (1, 2) sont en verre et le film adhésif (3) est en caoutchouc éthyl vinyl acétate (EVA).

8. Installation pour la fabrication, au moyen du procédé selon l'une quelconque des revendications 2 à 7, d'un assemblage composite feuilleté plan, comprenant au moins deux arêtes rectilignes parallèles, ladite installation comprenant sur un bâti, une paire de bobines de rubans adhésifs souples (14, 15, 16, 17) et un dispositif (26, 27) pour déplacer ledit assemblage (4, 4') entre la paire de bobines et au contact de celles-ci.

9. Installation selon la revendication 8, **caractérisée en ce qu'**elle comprend une deuxième paire de bobines de rubans adhésifs et **en ce que** les deux paires de bobines (14, 15, 16, 17) sont montées sur un châssis commun (18, 19) disposé transversalement par rapport à la direction de la translation (X, Y).

10. Installation selon la revendication 9, **caractérisée en ce qu'**elle comprend, d'une part, un deuxième dispositif de translation (26) de direction perpendiculaire à celle du dispositif de translation premièrement nommé (27) et, d'autre part, un deuxième châssis (19) portant deux autres bobines de rubans adhésifs (16, 17), ledit deuxième châssis étant disposé transversalement par rapport à la direction de translation (Y) du deuxième dispositif de translation.
